# DEMANDE DE BREVET EUROPEEN

(11) **EP 0 704 149 A2**
(43) Date de publication de la demande: **03.04.1996**
(21) Numéro de dépôt: 95402168.9
(22) Date de dépôt: 27.09.1995
(51) Int. Cl.: A01F 25/20, A01D 90/12

(54) **Timon d'attelage pour désileuse tractée**

(30) Priorité: 28.09.1994 FR 9411594
(71) Demandeur: AGRAM, F-93200 Saint Denis (FR)
(72) Inventeur: Lecomte, Stéphane, F-14350 Saint Martin des Besaces (FR)
(74) Mandataire: Cabinet Pierre HERRBURGER

(57) **Abrégé**

a) Timon d'attelage pour désileuse tractée.
b) Timon d'attelage caractérisé en ce qu'il est composé d'au moins deux parties (91, 92), mobiles l'une par rapport à l'autre, de manière commandée pour déplacer la désileuse (91) par rapport à la partie fixe (92) du timon (9), cette partie (92) étant reliée à un point fixe (93, XX).

## Description

La présente invention concerne un timon d'attelage pour une désileuse tractée destinée à être accrochée à un tracteur par l'intermédiaire d'un timon de longueur réglable.

On connaît déjà de multiples réalisations de telles désileuses.

Pour prélever des produits ensilés, on fait reculer la désileuse avec le tracteur jusqu'à ce que le front de taille de la partie ensilée soit accessible à la pelle de la désileuse. Puis avec la pelle on prélève une ou plusieurs tranches de produits ensilés. A un certain moment, le front de taille n'est plus accessible à la pelle, aussi faut-il déplacer la remorque soit pour prélever des tranches de produits ensilés à côté de la zone des produits qui ont été enlevés du front de taille, soit pour pénétrer plus profondément dans le front de taille. Pour cela on recule par exemple la désileuse avec le tracteur. Il est à remarquer qu'en position de prélèvement, pour que la pelle ou tout autre organe tel qu'une fraise puisse bien charger la benne, la désileuse est le plus souvent abaissée par relèvement de ses roues. Pour le déplacement, on commande l'abaissement des roues pour dégager le fond de la désileuse du sol et permettre de la déplacer.

La présente invention a pour but de créer un timon d'attelage de désileuse permettant de simplifier les manoeuvres par rapport au front de taille.

A cet effet, l'invention concerne un timon d'attelage de désileuse correspondant au type défini ci-dessus, caractérisé en ce que le timon est composé d'au moins deux parties, mobiles l'une par rapport à l'autre, de manière commandée pour déplacer la désileuse par rapport à la partie fixe du timon, cette partie étant reliée à un point fixe.

Ainsi, grâce à l'invention, le conducteur de la désileuse, qui est en général installé à l'extrémité avant de la désileuse pour en commander le fonctionnement, n'a pas à descendre de son poste de commande pour déplacer la désileuse et permettre son accès au front de taille.

Il lui suffit, à partir de son poste de commande, de relever la désileuse, c'est-à-dire d'abaisser les roues et de commander le vérin du timon télescopique pour faire reculer la désileuse de la distance nécessaire, le tracteur immobile servant de point d'appui.

A la fin des opérations de prélèvement, pour faciliter la traction de la désileuse et les manoeuvres de l'ensemble tracteur/désileuse, il peut être intéressant de raccourcir de nouveau le timon.

La présente invention sera décrite ci-après de manière plus détaillée à l'aide des dessins annexés dans lesquels :
- la figure 1 est une vue de côté d'une désileuse selon l'invention, dans une première position de désilage.
- la figure 2 montre la désileuse de la figure 1 remise en place près du front de taille à la suite des opérations de prélèvement précédentes.

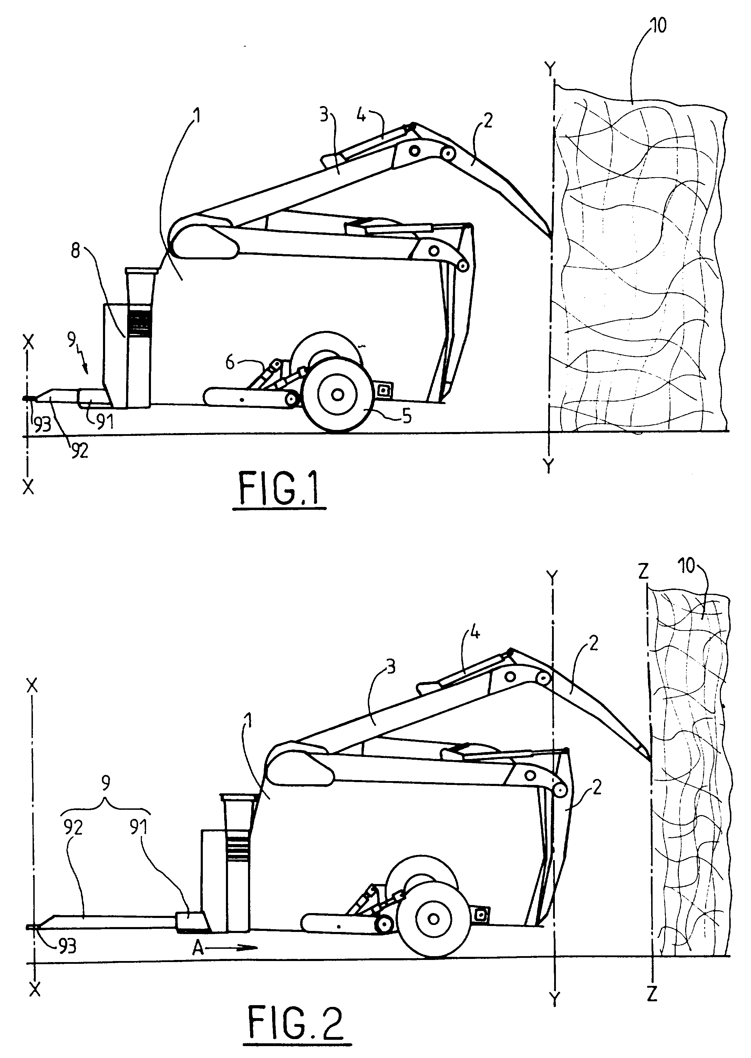

Selon la figure 1, l'invention concerne un timon d'attelage de désileuse. La désileuse comprend une benne 1 ouverte à l'arrière et munie au niveau de sa partie arrière d'un dispositif de désilage formé dans le cas du présent exemple par une pelle 2 portée par un bras 3 articulé à la benne, la pelle 2 étant elle-même articulée sur le bras 3. L'ensemble est commandé par au moins un vérin 4 qui bascule la pelle 2 par rapport au bras 3. Un autre vérin, non représenté, commande le relevage du bras 3.

En fait, la pelle 2 est placée entre deux bras jumelés 3. Le vérin 4 est lui aussi en général dédoublé.

Pour illustrer le fonctionnement de la désileuse les deux figures 1 et 2 montrent la pelle 2 et ses organes de support et de manoeuvre dans une position relevée, l'extrémité des dents de la pelle 2 attaquant le front de taille du silo et une position abaissée correspondant sensiblement à la fin du mouvement de chargement de la benne par la pelle 2.

La désileuse comporte également des roues 5, commandées par un vérin 6, de manière à se relever ou s'abaisser, c'est-à-dire pour abaisser la benne et la mettre au niveau du sol afin de faciliter son chargement ou de la relever pour son déplacement.

A l'avant de la benne 1, il y a une turbine 8 qui reçoit les produits contenus dans la benne et les propulse à travers une goulotte non représentée pour les distribuer soit dans les auges de l'étable pour des produits ensilés, soit pour les projeter au loin dans l'étable lorsqu'il s'agit de paille servant de litière.

L'avant de l'appareil est équipé d'un timon 9 télescopique formé d'une partie 91 solidaire de la benne 1 et d'une partie 92 coulissant télescopiquement par rapport à la partie 91. La partie 92 est terminée par un oeillet d'attelage 93.

Il est important de remarquer sur la figure 1 que dans la position représentée l'oeillet d'attelage 93 se trouve dans la position définie par l'axe XX.

Le front de taille porte la référence YY et les produits ensilés la référence 10.

Après avoir effectué le prélèvement d'une ou plusieurs couches de produits du front de taille YY, ce front de taille se trouve dans la position ZZ représentée à la figure 2.

Or, pour atteindre ce front de taille ZZ, il a fallu déplacer l'appareil de désilage et notamment la benne 1, d'une distance correspondante. Ce déplacement se faisait par un recul de l'appareil à l'aide du tracteur.

Selon l'invention, en déployant le timon télescopique 9 qui prend appui par sa partie télescopique 92 et son oeillet 93 sur le crochet du tracteur constituant un point fixe (XX) dans l'espace (le tracteur est freiné et bloqué), le mouvement télescopique repousse la partie 91 et la benne 1 ainsi que tout son équipement dans la direction de la flèche A d'une certaine distance apparaissant par la comparaison des figures 1 et 2 pour se rapprocher de nouveau du front de taille placé maintenant en ZZ.

En fait, le mouvement de recul de l'appareil et notamment de la benne 1 correspond sensiblement à l'épaisseur du front de taille.

La commande du vérin, non représenté, puisque logé à l'intérieur des parties 91, 92 du timon télescopique 9, se fait à partir du poste de commande de la désileuse qui se trouve directement au-dessus de la partie fixe 91 de la flèche.

Le conducteur de la désileuse peut rester à son poste de commande pour commander le mouvement de déploiement télescopique du timon 9 et provoquer le recul de l'appareil pour se rapprocher du front de taille ZZ.

L'invention a été décrite ci-dessus dans le cas d'un exemple particulier d'une désileuse munie d'une pelle avec une commande par des vérins et un équipement à turbine. La présente invention s'applique dans les mêmes conditions à une désileuse équipée d'un autre moyen de prise des produits ensilés comme par exemple une fraise.

L'alimentation du vérin hydraulique du timon se fait à partir de la prise de force du tracteur.

La commande par des moyens hydrauliques tels que des vérins et des moteurs hydrauliques peut également être remplacée par d'autres moyens. De même, la turbine n'est pas indispensable à l'application de l'invention.

## Revendications

1. Timon d'attelage pour désileuse tractée destinée à être accrochée à un tracteur, caractérisé en ce que le timon est composé d'au moins deux parties (91, 92), mobiles l'une par rapport à l'autre, de manière commandée pour déplacer la désileuse (91) par rapport à la partie fixe (92) du timon (9), cette partie (92) étant reliée à un point fixe (93, XX).

2. Timon d'attelage pour désileuse selon la revendication 1, caractérisé en ce que les deux parties (91, 92) du timon sont télescopiques.

3. Timon d'attelage pour désileuse selon la revendication 1, caractérisé en ce que les deux parties (91, 92) du timon sont commandées par un vérin.

4. Timon selon la revendication 3, caractérisé en ce que le vérin hydraulique est alimenté à partir du circuit hydraulique du tracteur.
